(19) Europäisches Patentamt
European Patent Office
Office européen des brevets

(11) **EP 4 786 417 A1**

(12) **EUROPEAN PATENT APPLICATION**
published in accordance with Art. 153(4) EPC

(43) Date of publication:
05.08.2026 Bulletin 2026/32

(21) Application number: 24872724.0

(22) Date of filing: 16.08.2024

(51) International Patent Classification (IPC):
$C01D\ 1/38^{(2006.01)}$    $C01D\ 15/02^{(2006.01)}$
$C01B\ 17/90^{(2006.01)}$    $B01D\ 61/44^{(2006.01)}$
$B01D\ 61/42^{(2006.01)}$

(52) Cooperative Patent Classification (CPC):
B01D 61/42; B01D 61/44; C01B 17/90; C01D 1/38;
C01D 15/02

(86) International application number:
PCT/KR2024/012250

(87) International publication number:
WO 2025/071015 (03.04.2025 Gazette 2025/14)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 26.09.2023 KR 20230128794

(71) Applicants:
• POSCO Holdings Inc.
Pohang-si, Gyeongsangbuk-do 37859 (KR)
• Research Institute of Industrial Science &
Technology
Pohang-si, Gyeongsangbuk-do 37673 (KR)

(72) Inventors:
• MYEONG, Wan Jae
Janggun-myeon, Sejong 30052 (KR)
• KIM, Hye Jeong
Pohang-si, Gyeongsangbuk-do 37673 (KR)
• KIM, Kyunghoon
Yeosu-si, Jeollanam-do 59691 (KR)
• KIM, Dong Soo
Pohang-si, Gyeongsangbuk-do 37671 (KR)
• SEO, Bae Mun
Pohang-si, Gyeongsangbuk-do 37638 (KR)
• WI, Jin Yeop
Pohang-si, Gyeongsangbuk-do 37669 (KR)

(74) Representative: Pfenning, Meinig & Partner mbB
Patent- und Rechtsanwälte
Theresienhöhe 11a
80339 München (DE)

(54) **SIMULTANEOUS PRODUCTION METHOD OF LITHIUM HYDROXIDE AND SULFURIC ACID**

(57) Provided is a method for simultaneously preparing lithium hydroxide and sulfuric acid.

The method for simultaneously preparing lithium hydroxide and sulfuric acid includes: preparing a bipolar membrane electrodialysis device including a first bipolar membrane, an anion exchange membrane, a cation exchange membrane, and a second bipolar membrane in which an acid chamber is formed between the first bipolar membrane and the anion exchange membrane, a salt chamber is formed between the anion exchange membrane and the cation exchange membrane, and a base chamber is formed between the cation exchange membrane and the second bipolar membrane; adding a lithium sulfate aqueous solution to the salt chamber, adding a sulfuric acid aqueous solution to the acid chamber, and adding a lithium hydroxide aqueous solution to the base chamber of the bipolar membrane electrodialysis device; and discharging a desalination solution formed in the salt chamber, discharging the sulfuric acid aqueous solution formed in the acid chamber, and discharging the lithium hydroxide aqueous solution formed in the base chamber of the bipolar membrane electrodialysis device.

EP 4 786 417 A1

# FIG. 2

Stack1

QHS in    QLS in    QLH in

BP    A    C    BP

$CH^- BP$   $H^+ BP$    $CH^- BP$   $H^+ BP$

+    $QSO_4(2-)A$    $QLi+C$    −

$QH_2OA$    $QH_2OC$

QHS out    QLS out    QLH out

QHS in    QLS in    QLH in

BP    A    C    BP

Stack2

$CH^- BP$   $H^+ BP$    $CH^- BP$   $H^+ BP$

+    $QSO_4(2-)A$    $QLi+C$    −

$QH_2OA$    $QH_2OC$

QHS out    QLS out    QLH out

QHS in    QLS in    QLH in

BP    A    C    BP

Stack3

$CH^- BP$   $H^+ BP$    $CH^- BP$   $H^+ BP$

+    $QSO_4(2-)A$    $QLi+C$    −

$QH_2OA$    $QH_2OC$

QHS out    QLS out    QLH out

## Description

[**Technical Field**]

The present disclosure relates to a method for simultaneously preparing lithium hydroxide and sulfuric acid, and more particularly, to a method for simultaneously preparing lithium hydroxide and sulfuric acid, which may prevent a decrease in current efficiency of a bipolar membrane electrodialysis process and reduce electricity consumption.

[**Background Art**]

Recently, due to the rapid growth of electric vehicle markets, a lithium secondary battery market for an electric vehicle is also explosively increasing. Accordingly, innovative technology for economically producing a lithium compound which is a raw material of a lithium secondary battery is being developed.

Among various methods for producing high-purity lithium hydroxide of a battery grade for an electric vehicle, in particular, electrochemical membrane separation technology for producing lithium hydroxide from a lithium salt is being actively developed.

Lithium hydroxide (LiOH) and sulfuric acid ($H_2SO_4$) may be simultaneously produced from a lithium salt, using a bipolar membrane electrodialysis method. When a lithium sulfate ($Li_2SO_4$) aqueous solution is added to a bipolar membrane electrodialysis tank and direct current is applied, lithium hydroxide (LiOH) and sulfuric acid ($H_2SO_4$) may be simultaneously produced. In this case, a lithium ion ($Li^+$) and a sulfate ion ($SO_4^{2-}$) dissociated from lithium sulfate pass through a cation exchange membrane and an anion exchange membrane, respectively. Meanwhile, the bipolar membrane dissociates water using applied current to produce proton ($H^+$) and a hydroxide ion ($OH^-$), the produced hydroxide ion migrates to a positive electrode (+) side and meets a lithium ion to form lithium hydroxide, and the produced proton migrates to a negative electrode (-) side and meets a sulfate ion to form sulfuric acid.

A proportion of current used for producing a target product to the applied current may be represented by current efficiency, and is calculated as follows:

Current efficiency (%) = 100 $\times$ (target ion production amount [mol]) $\times$ Faraday constant [C/mol]) / (current density [A/$m^2$] $\times$ effective area of membrane [$m^2$] $\times$ application time [sec])

There are various factors affecting current efficiency, and among them, performance of the physical properties of a cation exchange membrane, an anion exchange membrane, and a bipolar membrane used is important.

Meanwhile, since the current efficiency is directly related to production costs, development of technology for increasing current efficiency is needed.

[**Disclosure**]

[**Technical Problem**]

The present disclosure attempts to provide a method for simultaneously preparing lithium hydroxide and sulfuric acid efficiently while increasing current efficiency. Specifically, the present disclosure attempts to provide a method for simultaneously preparing lithium hydroxide and sulfuric acid using bipolar membrane electrodialysis capable of improving current efficiency by controlling a migration amount of water and a lithium cation in an ion exchange membrane.

[**Technical Solution**]

An exemplary embodiment of the present disclosure provides a method for simultaneously preparing lithium hydroxide and sulfuric acid including: preparing a bipolar membrane electrodialysis device including a first bipolar membrane, an anion exchange membrane, a cation exchange membrane, and a second bipolar membrane in which an acid chamber is formed between the first bipolar membrane and the anion exchange membrane, a salt chamber is formed between the anion exchange membrane and the cation exchange membrane, and a base chamber is formed between the cation exchange membrane and the second bipolar membrane; adding a lithium sulfate aqueous solution to the salt chamber, adding a sulfuric acid aqueous solution to the acid chamber, and adding a lithium hydroxide aqueous solution to the base chamber of the bipolar membrane electrodialysis device; and discharging a desalination solution formed in the salt chamber, discharging the sulfuric acid aqueous solution formed in the acid chamber, and discharging the lithium hydroxide aqueous solution formed in the base chamber of the bipolar membrane electrodialysis device.

A migration amount weight ratio between water ($H_2O$) and a lithium cation ($Li^+$) in the cation exchange membrane of the bipolar membrane electrodialysis device may be 40 or less.

A ratio of a flow rate of the lithium hydroxide aqueous solution added to the base chamber to a flow rate of the lithium hydroxide aqueous solution discharged from the base chamber of the bipolar membrane electrodialysis device may be 0.3 to 0.6.

A ratio of a flow rate of the sulfuric acid aqueous solution added to the acid chamber to a flow rate of the sulfuric acid aqueous solution discharged from the acid chamber of the bipolar membrane electrodialysis device may be 0.9 to 1.2.

A current density passing through the cation exchange membrane and the anion exchange membrane of the bipolar membrane electrodialysis device may be 20 mA/cm² to 150 mA/cm².

A concentration of the lithium hydroxide aqueous solution added to the base chamber of the bipolar membrane electrodialysis device may be 0 mol/L to 1 mol/L, and a concentration of the lithium hydroxide aqueous solution discharged from the base chamber of the bipolar membrane electrodialysis device may be 1 mol/L to 5 mol/L.

A concentration of the sulfuric acid aqueous solution added to the acid chamber of the bipolar membrane electrodialysis device may be 0 mol/L to 0.5 mol/L, and a concentration of the sulfuric acid aqueous solution discharged from the acid chamber of the bipolar membrane electrodialysis device may be 0.5 mol/L to 3 mol/L.

A concentration of the lithium sulfate aqueous solution added to the salt chamber of the bipolar membrane electrodialysis device may be 0.5 mol/L to 2.5 mol/L, and a concentration of the lithium sulfate aqueous solution discharged from the salt chamber of the bipolar membrane electrodialysis device may be 0.1 mol/L to 2 mol/L.

The bipolar membrane electrodialysis device may be two or more serially connected electrodialysis stacks including the first bipolar membrane, the anion exchange membrane, the cation exchange membrane, and the second bipolar membrane in which the acid chamber is formed between the first bipolar membrane and the anion exchange membrane, the salt chamber is formed between the anion exchange membrane and the cation exchange membrane, and the base chamber is formed between the cation exchange membrane and the second bipolar membrane.

[Advantageous Effects]

According to an exemplary embodiment of the present disclosure, current efficiency of a bipolar membrane electrodialysis process may be increased by controlling a migration amount of water and a lithium cation in an ion exchange membrane in the bipolar membrane electrodialysis process.

[**Description of the Drawings**]

FIG. 1 schematically shows a bipolar membrane electrodialysis (BPED) device according to an exemplary embodiment of the present disclosure.
FIG. 2 schematically shows a bipolar membrane electrodialysis (BPED) system used in an experiment of lithium hydroxide and sulfuric acid preparation of the present disclosure.

[**Best Mode for Invention**]

The terms such as first, second, and third are used for describing various parts, components, areas, layers, and/or sections, but are not limited thereto. These terms are used only for distinguishing one part, component, area, layer, or section from other parts, components, areas, layers, or sections. Therefore, a first part, component, area, layer, or section described below may be mentioned as a second part, component, area, layer, or section without departing from the scope of the present disclosure.

The terminology used herein is only for mentioning a certain example, and is not intended to limit the present disclosure. Singular forms used herein also include plural forms unless otherwise stated clearly to the contrary. The meaning of "comprising" used in the specification is embodying certain characteristics, areas, integers, steps, operations, elements, and/or components, but is not excluding the presence or addition of other characteristics, areas, integers, steps, operations, elements, and/or components.

When it is mentioned that a part is "on" or "above" the other part, it means that the part is directly on or above the other part or another part may be interposed therebetween. In contrast, when it is mentioned that a part is "directly on" the other part, it means that nothing is interposed therebetween.

Though not defined otherwise, all terms including technical terms and scientific terms used herein have the same meaning as commonly understood by a person with ordinary skill in the art to which the present disclosure pertains. Terms defined in commonly used dictionaries are further interpreted as having a meaning consistent with the related technical literatures and the currently disclosed description, and unless otherwise defined, they are not interpreted as having an ideal or very formal meaning.

In addition, unless otherwise particularly stated, % refers to wt%, and 1 ppm refers to 0.0001 wt%.

In the present specification, the term "combination(s) thereof" described in the Markush format refers to a mixture or combination of one or more selected from the group consisting of the constituent elements described in the Markush format, and refers to inclusion of one or more selected from the group consisting of the constituent elements.

Hereinafter, an exemplary embodiment of the present disclosure will be described in detail so that a person with ordinary skill in the art to which the present disclosure pertains may easily carry out the present disclosure. As those skilled in the art would realize, the described embodiments may be modified in various different ways, all without departing from the spirit or scope of the present disclosure.

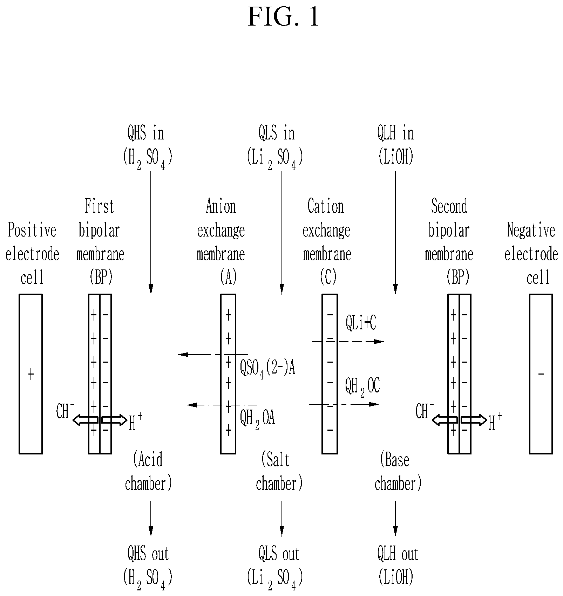

FIG. 1 schematically shows a bipolar membrane electrodialysis (BPED) device according to an exemplary embodiment of the present disclosure.

Referring to FIG. 1, the bipolar membrane electrodialysis device according to an exemplary embodiment of the present disclosure may include a unit pair which is positioned in a repeatedly laminating manner between a positive electrode cell and a negative electrode cell. The unit pair may have a triplet configuration in which a bipolar membrane, an anion exchange membrane, and a cation exchange membrane are sequentially positioned. Herein, specifically, it is a configuration in which the bipolar membrane, a spacer gasket, the anion exchange membrane, a spacer gasket, the cation exchange membrane, and a spacer gasket may be sequentially positioned. The unit pairs having the configuration may be positioned sequentially adjacent to each other. Among the two-unit pairs adjacent to each other, the spacer gasket positioned at a latter stage of the cation exchange membrane of the unit pair positioned in the front may be positioned adjacent to a bipolar membrane of the unit pair positioned adjacent to the latter stage.

Referring to FIG. 1, an acid chamber may be formed between a first bipolar membrane and the anion exchange membrane, and a salt chamber may be formed between the anion exchange membrane and the cation exchange membrane. In addition, a base chamber may be formed between the cation exchange membrane and a second bipolar membrane.

Hereinafter, a method for simultaneously preparing lithium hydroxide and sulfuric acid according to an exemplary embodiment of the present disclosure will be described.

First, bipolar electrodialysis may be performed by adding a lithium salt aqueous solution, specifically a lithium sulfate aqueous solution to a salt chamber of the unit pair, adding a low-concentration sulfuric acid aqueous solution including a sulfuric acid concentration of 0, which is an acid chamber reaction solution to an acid chamber, and adding a low-concentration lithium hydroxide aqueous solution including a lithium hydroxide concentration of 0, which is base chamber reaction solution to a base chamber.

Herein, when DC voltage is applied to the bipolar membrane electrodialysis device to allow current to flow, a sulfuric acid ($H_2SO_4$) aqueous solution is formed in the acid chamber between the first bipolar membrane and the anion exchange membrane, a lithium hydroxide (LiOH) aqueous solution is formed in the base chamber between the cation exchange membrane and the second bipolar membrane, and a desalination solution including a remaining lithium salt which has not migrate in an added lithium salt aqueous solution is formed in the salt chamber between the cation exchange membrane and the anion exchange membrane.

Specifically, a process of forming the sulfuric acid ($H_2SO_4$) and the lithium hydroxide (LiOH) is as follows.

When electricity is applied to the first bipolar membrane, water coming into the membrane from the acid chamber and the base chamber is dissociated to produce a hydrogen ion ($H^+$) and a hydroxide ion ($OH^-$). Herein, the hydroxide ion ($OH^-$) produced by water dissociation migrates to the base chamber in the positive electrode (+) cell side, and the produced hydrogen ion ($H^+$) migrates to the acid chamber between the first bipolar membrane and the anion exchange membrane. Meanwhile, the anion of the lithium salt aqueous solution added between the anion exchange membrane and the cation exchange membrane passes through the anion exchange membrane and migrates between the first bipolar membrane and the anion exchange membrane. Further, the hydrogen ion ($H^+$) and the anion are concentrated between the first bipolar membrane and the anion exchange membrane and form a high-concentration sulfuric acid ($H_2SO_4$) aqueous solution. The acid chamber reaction solution in the present disclosure may be specifically a mixture of the sulfuric acid ($H_2SO_4$) aqueous solution and deionized water (DI water).

Next, a process of forming a lithium hydroxide (LiOH) aqueous solution is as follows. The second bipolar membrane dissociates entering water in the base chamber and the acid chamber to produce a hydrogen ion ($H^+$) and a hydroxide ion ($OH^-$). Herein, the hydrogen ion ($H^+$) produced by water dissociation migrates to the acid chamber in the negative electrode (-) cell side, and the decomposed hydroxide ion ($OH^-$) migrates to the base chamber between the second bipolar membrane and the anion exchange membrane. Meanwhile, a lithium ion ($Li^+$) of the lithium salt aqueous solution added between the anion exchange membrane and the cation exchange membrane passes through the cation exchange membrane and migrates to the base chamber to add the lithium ion. Further, the hydroxide ion ($OH^-$) and the lithium ion ($Li^+$) are concentrated in the base chamber and form a high-concentration lithium hydroxide (LiOH) aqueous solution. The base chamber solution in the present disclosure may be specifically, a lithium hydroxide (LiOH) aqueous solution and/or deionized water (DI water).

More specifically, a sulfate anion ($SO_4^{2-}$) meets a hydrogen ion ($H^+$) from water dissociation in the bipolar membrane in the positive electrode cell side and is converted into an acid ($H_2SO_4$), and a lithium ion ($Li^+$) migrating a negative electrode through a cation exchange membrane reacts with a hydroxide group ($OH^-$) produced in the bipolar membrane and is converted into lithium hydroxide (LiOH).

In an exemplary embodiment of the present disclosure, the lithium salt may be specifically a sulfate ($Li_2SO_4$), and the acid may be sulfuric acid ($H_2SO_4$). Meanwhile, the acid chamber reaction solution may be low-concentration sulfuric acid ($H_2SO_4$) or water (deionized water), and the base chamber reaction solution may be a low-concentration lithium hydroxide aqueous solution or water (deionized water).

Herein, the entire reaction scheme may be as follows:

$$Li_2SO_4 \text{ (aq)} \Leftrightarrow 2Li^+ \text{ (migrating to base chamber)} + SO_4^{2-} \text{ (migrating to acid chamber)}$$

$$H_2O \Leftrightarrow H^+ \text{ (migrating to acid chamber)} + OH^- \text{ (migrating to base chamber)}$$

$$Li_2SO_4 \text{ (aq)} + 2H_2O \Leftrightarrow 2LiOH \text{ (aq, base chamber)} + H_2SO_4 \text{ (aq, acid chamber)}$$

Herein, the high-concentration lithium salt aqueous solution added to the salt chamber may be discharged to the outside of the electrodialysis device by producing a low-concentration lithium salt aqueous solution partly remaining after the lithium ion and the acid group migrate and escape, that is, a desalination solution.

In addition, the lithium salt aqueous solution formed in the salt chamber is added to the unit pair positioned adjacent to the latter stage and the same electrodialysis as in the unit pair in the former stage may be performed.

Herein, as described above, in order to increase current efficiency when preparing the lithium hydroxide aqueous solution and the sulfuric acid aqueous solution from the lithium salt aqueous solution, a rate at which water (pure water) is dissociated in the bipolar membrane and a rate at which a lithium ion and an anion included in a lithium-containing aqueous solution migrate may be appropriately adjusted. In the case in which the rates are not appropriately adjusted, for example, in the case in which the dissociation rate of pure water (or deionized water) is higher than the migration rate of the lithium ion and the anion included in the lithium-containing aqueous solution, the dissociated hydrogen ion and hydroxide ion do not meet their zwitterions. Accordingly, ion migration for maintaining electrical neutrality occurs. Meanwhile, in a direction of ion migration, a direction of diffusion migration due to a concentration difference should be considered together with a direction of electric migration. For example, when the concentration of the hydroxide ion ($OH^-$) of the base chamber of the cation exchange membrane is higher than the concentration of the hydroxide ion ($OH^-$) of the salt chamber, diffusion migration of the hydroxide ion from the base chamber to the salt chamber occurs by diffusion. Since the direction of the diffusion migration is opposite to the direction of electricity migration, current efficiency is lowered. The cation exchange membrane may suppress back-diffusion (called back diffusion since the direction is opposite to the direction of electric migration) of the hydroxide group which is an anion to some extent by a Donnan exclusion force of a fixed anion (co-anion) inside. However, as the hydroxide concentration in the base chamber gradually increases, the back-diffusion to the salt chamber may also gradually increase to gradually decrease current efficiency

Therefore, in order to increase lithium hydroxide production current efficiency, it is important to adjust the water dissociation rate in the bipolar membrane and the lithium ion and anion migration rates and maintain a proper balance of the migrated ions with the water ($H_2O$) migration rate in the exchange membrane, by appropriately adjusting the physical properties of the anion exchange membrane, the bipolar membrane, and the cation exchange membrane.

Water migrates together when a lithium cation ($Li^+$) migrates through a cation exchange membrane. When the amount of water ($H_2O$) migrating together is too large, a fixed anion density of the cation exchange membrane is decreased by swelling of the cation exchange membrane and a Donnan exclusion force to the hydroxide anion ($OH^-$) is decreased, resulting in increased back migration of the anion to decrease current efficiency.

In an exemplary embodiment of the present disclosure, the cation exchange membrane may be one or more selected from CM2, CMB, and CSE available from Astom, CD100 and CH100 available from W-Scope, TWEDC1S available from Shandong Tienwei, and CT-4 and CTG-10 available from Hangzhou Lanran.

A migration amount weight ratio ($\omega_C$) between water ($H_2O$) and a lithium cation ($Li^+$) in the cation exchange membrane of the electrodialysis device may be 40 or less, specifically 35 or less, and more specifically 20 to 35.

A migration amount weight ratio ($\omega_C$) between water and a lithium cation per unit time in the cation exchange membrane may be represented by the following equation:

$$\omega_C = H_2O \text{ migration amount (g)} / Li^+ \text{ migration amount (g)} \quad (1)$$

When the migration amount weight ratio ($\omega_C$) value between water ($H_2O$) and a lithium cation ($Li^+$) in the cation exchange membrane is 40, a significant decrease in current efficiency applied for producing lithium hydroxide may be prevented and electrical energy consumption may be reduced.

**EP 4 786 417 A1**

In the present disclosure, the ωc may be adjusted according to the type of polymer forming the cation exchange membrane, the type of fixed ion group, an ion exchange capacity, a membrane thickness, and the like. Even in the case in which the polymer forming the membrane, the type of fixed ion, and the membrane thickness are the same, ωc may vary when an ion exchange capacity (milli-equivalent/g-dry polymer) which is a proportion of the amount of the fixed ion group (moles) in the dry weight of the membrane changes. In addition, the ωc may vary also depending on the process conditions of the bipolar membrane electrodialysis device, that is, temperature, concentration, and the like.

In another exemplary embodiment of the present disclosure, a ratio ($Q_{LH\,in}/Q_{LH\,out}$) of a supply flow rate of a low-concentration lithium hydroxide(LiOH) aqueous solution added as a raw material to a discharge flow rate of a high concentration lithium hydroxide (LiOH) aqueous solution produced in the base chamber of the bipolar membrane electrodialysis device may be 0.3 to 0.6. When the ratio ($Q_{LH\,in}/Q_{LH\,out}$) value is less than 0.3, the concentration of the lithium hydroxide aqueous solution is increased, so that reverse migration by hydroxide ion ($OH^-$) diffusion through the cation exchange membrane may be increased to lower current efficiency, and when the ratio ($Q_{LH\,in}/Q_{LH\,out}$) value is more than 0.6, the amount of water to be removed in the process of preparing crystalline lithium hydroxide in the latter stage is increased to lower entire productivity. Meanwhile, in the present disclosure, the concentration of the high concentration lithium hydroxide (LiOH) aqueous solution produced in the base chamber may be in a range of 1 mol/L to 5 mol/L, and the concentration of the low-concentration lithium hydroxide (LiOH) aqueous solution added as a raw material may be in a range of 0 mol/L to 1 mol/L. When the concentration of the produced lithium hydroxide (LiOH) aqueous solution is less than 1 mol/L, economic feasibility is poor, and when the concentration of the produced lithium hydroxide is more than 5 mol/L or more, back-diffusion through the cation exchange membrane is excessively increased to lower current efficiency. The lithium hydroxide (LiOH) aqueous solution added as a raw material may be pure water (lithium hydroxide concentration: 0 mol/L), and when the concentration is more than 1 mol/L, lithium hydroxide is excessively consumed to deteriorate economic feasibility.

In another exemplary embodiment of the present disclosure, a ratio ($Q_{HS\,in}/Q_{HS\,out}$) of a supply flow rate of a low concentration sulfuric acid ($H_2SO_4$) aqueous solution added to the acid chamber as a raw material to a discharge flow rate of a high-concentration sulfuric acid ($H_2SO_4$) aqueous solution produced in the acid chamber of the bipolar membrane electrodialysis device may be 0.9 to 1.2. When the ratio ($Q_{HS\,in}/Q_{HS\,out}$) value is less than 0.9, the concentration of the produced sulfuric acid ($H_2SO_4$) is too high to increase reverse migration of a hydrogen ion (proton) through the anion exchange membrane, thereby lowering current efficiency. In addition, when the ratio ($Q_{HS\,in}/Q_{HS\,out}$) value is more than 1.2, the concentration of the produced sulfuric acid ($H_2SO_4$) is too thin, so that utility of the produced sulfuric acid as a product is low. Meanwhile, the concentration of the high-concentration sulfuric acid ($H_2SO_4$) aqueous solution produced in the acid chamber may be in a range of 0.5 mol/L to 3 mol/L, and the concentration of the low-concentration sulfuric acid ($H_2SO_4$) aqueous solution added as a raw material may be in a range of 0 mol/L to 0.5 mol/L. When the concentration of the produced sulfuric acid aqueous solution is 0.5 mol/L or less, economic feasibility is poor, and when the concentration is more than 3 mol/L or more, back-diffusion of a hydrogen ion ($H^+$) through the anion exchange membrane is excessive to lower current efficiency. The sulfuric acid ($H_2SO_4$) aqueous solution added as a raw material may be pure water (sulfuric acid concentration: 0 mol/L), and when the concentration is more than 0.5 mol/L, the sulfuric acid is excessively consumed to deteriorate economic feasibility.

Meanwhile, in the present disclosure, the concentration of the lithium sulfate aqueous solution added to the salt chamber of the bipolar membrane electrodialysis device may be 0.5 mol/L to 2.5 mol/L, and the concentration of the lithium sulfate aqueous solution discharged from the salt chamber of the electrodialysis device may be 0.1 mol/L to 2 mol/L. When the concentration of the added lithium sulfate aqueous solution is less than 0.5 mol/L, resistance of the salt aqueous solution is increased, so that operation is not easy, and when the concentration is 2.5 mol/L or more, solubility in water approaches to limit, so that operation is not easy. In addition, the concentration of the lithium sulfate aqueous solution (desalination solution) discharged from the salt chamber of the electrodialysis device is less than 0.1 mol/L, resistance of the salt aqueous solution is excessively increased, so that operation at a high current density is difficult, and when the concentration is more than 2 mol/L, a device size is too large and economic feasibility is poor.

In another exemplary embodiment of the present disclosure, a current density passing through a membrane (cation exchange membrane and anion exchange membrane) may be 20 mA/cm² to 150 mA/cm² (based on membrane effective area), and specifically 50 mA/cm² to 100 mA/cm². When the current density is less than 20 mA/cm², a production (kg/m²-hr) of lithium hydroxide (LiOH) or sulfuric acid ($H_2SO_4$) is too low, and when the current density is more than 150 mA/cm², resistance is too high, resulting in deterioration (such as blistering, delamination, and aging) of the ion exchange membrane, in particular, the bipolar membrane.

In the present disclosure, the membrane current density may be supplied by a rectifier considering the effective membrane area. Herein, the current density may be in a range where a temperature rise and membrane deterioration do not occur by various resistances which may occur in the bipolar membrane electrodialysis device.

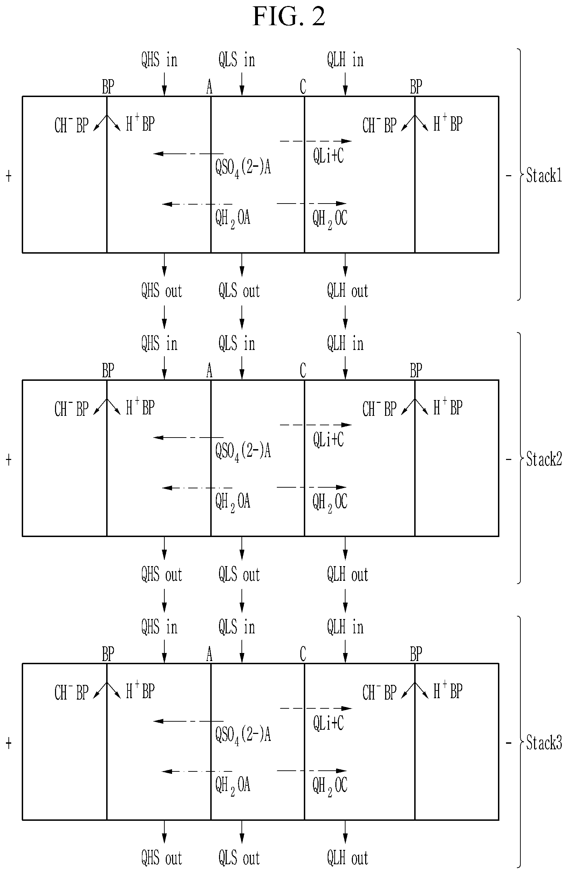

FIG. 2 schematically shows a bipolar membrane electrodialysis (BPED) system used in an experiment of lithium hydroxide and sulfuric acid preparation of the present disclosure.

In an exemplary embodiment of the present disclosure, the bipolar membrane electrodialysis (BPED) system

7

may include an electrodialysis stack including one or more pairs in which a cation exchange membrane (C), an anion exchange membrane (A), and a bipolar membrane (BP) are sequentially arranged.

In addition, two or more stacks may be connected in series. Herein, the membrane current density of the serially connected stacks may be gradually decreased.

FIG. 2 illustrates that the material discharged from the stack in the former stage directly flows in the stack in the latter stage for convenience, but a part of the material discharge from the stack in the former stage may be separated to the outside and only a remainder may be supplied to the stack in the latter stage, and the material discharged from the stack in the front stage may be mixed with an additional raw material and supplied to the stack in the latter stage. It is not particularly limited as long as the purpose of the present disclosure is achieved.

(Experiment of lithium hydroxide and sulfuric acid preparation)

3 stacks formed by stacking 40 pairs (effective membrane area: 0.5 $m^2$) in which a cation exchange membrane (C), an anion exchange membrane (A), and a bipolar membrane (BP) were sequentially arranged were connected in series to form a BPED system.

FIG. 2 schematically shows the BPED system used in the experiment of lithium hydroxide and sulfuric acid preparation of the present disclosure.

The cation exchange membrane C may be one or more selected from CM2, CMB, and CSE available from Astom, CD100 and CH100 available from W-Scope, TWEDC1S available from Shandong Tienwei, and CT-4 and CTG-10 available from Hangzhou Lanran, and the cation exchange membranes used in Stacks 1 to 3 may be the same as or different from each other.

The anion exchange membrane A may be one or more selected from ASE, AID, and ACD available from Astom, AD100 available from W-Scocpe, TWEDA1R available from Shandong Tienwei, and ATD available from Hangzhou Lanran, and the anion exchange membranes used in Stacks 1 to 3 may be the same as or different from each other.

The bipolar membrane BP may be one or more selected from BP-1 and BPU available from Astom, FBM available from Fumatech, TRJBM available from Beijing Tingrun, and BP-2 available from Hangzhou Lanran, and the bipolar membranes used in Stacks 1 to 3 may be the same as or different from each other.

Solution flow in the stack will be described in detail referring to FIG. 2.

A lithium sulfate ($Li_2SO_4$) salt aqueous solution at a Li concentration of 10 g/L was supplied (lithium sulfate supply amount: $Q_{LS\ in}$(kg/hr)) between the anion exchange membrane (A) and the cation exchange membrane (C), water (deionized water, deionized water(DIW)) or a mixture of a lithium hydroxide aqueous solution and water (DIW)) was supplied (supply amount: $Q_{LH\ in}$(kg/hr)) between the cation exchange membrane (C) and the bipolar membrane (BP), and water (DIW) or a mixture of water and a sulfuric acid aqueous solution was supplied (supply amount: $Q_{HS\ in}$(kg/hr)) between the bipolar membrane (BP) and the anion exchange membrane (A). Positive (+) direct current electricity was applied to an electrode positioned at the end of the stack in the anion exchange membrane (A) side, and negative (-) direct current electricity was applied to an electrode positioned at the end of the stack in the cation exchange membrane (C) side, based on the salt chamber to which the lithium sulfate salt is supplied.

Specifically, the amount of lithium hydroxide (LiOH) ($Q_{LH\ out}$ (kg/hr)) and the amount of sulfur acid ($H_2SO_4$) ($Q_{HS\ out}$ (kg/hr)) which were produced by applying electricity to Stack 1 at a size of an ion exchange membrane current density of 77 mA/$cm^2$, Stack 2 at a size of an ion exchange membrane current density of 73 mA/$cm^2$, and Stack 3 at a size of an ion exchange membrane current density of 60 mA/$cm^2$ and discharged were measured.

The amount of lithium ion ($Li^+$) in the produced lithium hydroxide and the content of sulfur in the sulfuric acid were measured by an ion coupled chromatography (ICP) method.

Most of the lithium content in the lithium hydroxide may be regarded as a lithium ion ($Li^+$) value ($Q_{Li+\ C}$ (kg/hr)) migrating through the cation exchange membrane, and most of the S value in the sulfuric acid may be regarded as a value ($Q_{SO4\ 2-\ A}$ (kg/hr)) of the sulfate ion ($SO_4^{2-}$) migrating through the anion exchange membrane. The sulfate migration amount was calculated from a sulfur migration amount.

The amount of water migrating with the lithium ion through the cation exchange membrane ($Q_{H2O\ C}$ (kg/hr)) may be calculated as follows:

$$(Q_{H2O\ C}) = (Q_{LH\ out}) - (Q_{LH\ in}) - (Q_{Li+\ C}) \quad (2)$$

However, the amount of water ($H_2O$) flowing in the bipolar membrane in the base chamber and the amount of the hydroxide ion ($OH^-$) produced by water dissociation in the bipolar membrane and supplied to the base chamber may be offset each other in a normal state and are neglectable.

A weight ratio (parameter, $\omega_C$) between water and a lithium ion migrating through the cation exchange membrane was calculated as follows:

$$\omega_C = (Q_{H2O\ C}) / (Q_{Li+\ C}) \quad (3)$$

The amount of water ($Q_{H2O\ A}$ (kg/hr)) migrating with a sulfate ion through the anion exchange membrane may be calculated as follows:

$$(Q_{H2O\ A}) = (Q_{HS\ out}) - (Q_{HS\ in}) - (Q_{SO4\ 2-\ A}) \quad (4)$$

However, the amount of water flowing in the bipolar membrane in the acid chamber and the amount of the hydrogen ion ($H^+$) produced by water dissociation in the bipolar membrane and supplied to the acid chamber may be offset each other in a normal state and is neglectable.

A weight ratio (parameter, $\omega_A$) of water and a sulfate ion migrating through the anion exchange membrane was calculated as follows:

$$\omega_A = (Q_{H2O\ A}) / (Q_{SO4\ 2-\ A}) \quad (5)$$

Operation was performed in a rectifier mode in which voltage sum was similarly adjusted, and the current efficiency was calculated as follows from the amount of produced lithium:

$$\text{Current efficiency (\%)} = 100 \times \{\text{Li production amount (mol)} \times \text{Faraday constant (C/mol)}\}$$

$$/ \{\text{current density A/m}^2 \times \text{membrane area (m}^2) \times \text{time (sec)}\} \quad (6)$$

[**Mode for Invention**]

(Example 1)

In Example 1, lithium hydroxide and sulfuric acid were prepared by using CH100 available from W-Scope as a cation exchange membrane, A100 available from W-Scope as an anion exchange membrane, and BPU available from Astom as a bipolar membrane. Meanwhile, in Stacks 1 to 3, the same cation exchange membrane, anion exchange membrane, and bipolar membrane were used.

Meanwhile, a ratio ($Q\ LH_{in}/Q\ LH_{out}$) of a flow rate of the lithium hydroxide aqueous solution supplied to the stack to a flow rate of the lithium hydroxide aqueous solution discharged from the stack was 0.36, and a ratio ($Q\ HS_{in}/Q\ HS_{out}$) of a flow rate of the sulfuric acid aqueous solution supplied to the stack to a flow rate of the sulfuric acid aqueous solution discharged from the stack was 1.03.

(Example 2)

In Example 2, lithium hydroxide and sulfuric acid were prepared by using CD100 available from W-Scope as a cation exchange membrane, AD100 available from W-Scope as an anion exchange membrane, and FBM available from Fumatech as a bipolar membrane. Meanwhile, in Stacks 1 to 3, the same cation exchange membrane, anion exchange membrane, and bipolar membrane were used.

Meanwhile, a ratio ($Q\ LH_{in}/Q\ LH_{out}$) of a flow rate of the lithium hydroxide aqueous solution supplied to the stack to a flow rate of the lithium hydroxide aqueous solution discharged from the stack was 0.43, and a ratio ($Q\ HS_{in}/Q\ HS_{out}$) of a flow rate of the sulfuric acid aqueous solution supplied to the stack to a flow rate of the sulfuric acid aqueous solution discharged from the stack was 1.05.

(Example 3)

In Example 3, lithium hydroxide and sulfuric acid were prepared by using CH100 available from W-Scope as a cation exchange membrane, AD100 available from W-Scope as an anion exchange membrane, and FBM available from Fumatech as a bipolar membrane. Meanwhile, in Stacks 1 to 3, the same cation exchange membrane, anion exchange membrane, and bipolar membrane were used.

Meanwhile, a ratio ($Q\ LH_{in}/Q\ LH_{out}$) of a flow rate of the lithium hydroxide aqueous solution supplied to the stack to a flow rate of the lithium hydroxide aqueous solution discharged from the stack was 0.53, and a ratio (Q HS $_{in}$/Q HS $_{out}$) of a flow rate of the sulfuric acid aqueous solution supplied to the stack to a flow rate of the sulfuric acid aqueous solution discharged from the stack was 0.95.

(Comparative Example 1)

In Comparative Example 1, lithium hydroxide and sulfuric acid were prepared by using a membrane (CH100') of which the ion exchange capacity was changed from that of the membrane available from W-Scope as a cation exchange membrane, AD100 available from W-Scope as an anion exchange membrane, and FBM available from Fumatech as a bipolar membrane. Meanwhile, in Stacks 1 to 3, the same cation exchange membrane, anion exchange membrane, and bipolar membrane were used.

Meanwhile, a ratio ($Q_{LH\,in}$/$Q_{LH\,out}$) of a flow rate of the lithium hydroxide aqueous solution supplied to the stack to a flow rate of the lithium hydroxide aqueous solution discharged from the stack was 0.28, and a ratio ($Q_{HS\,in}$/$Q_{HS\,out}$) of a flow rate of the sulfuric acid aqueous solution supplied to the stack to a flow rate of the sulfuric acid aqueous solution discharged from the stack was 1.27.

The results of calculating flow rates and parameters ($\omega_C$, $\omega_A$) measured in Examples 1 to 3 and Comparative Example 1 are shown in the following Table 1 :

(Table 1)

| | | LiOH solution | | | | $H_2SO_4$ solution | | | | Cation exchange membrane | Anion exchange membrane | Voltage sum (V) | Current efficiency (%) |
|---|---|---|---|---|---|---|---|---|---|---|---|---|---|
| | | $Q_{LH}$ in (kg/hr) | $Q_{LH}$ out (kg/hr) | $Q_{Li+}$ C (kg/hr) | $Q_{H2O}$ C (kg/hr) | $Q_{HS}$ in (kg/hr) | $Q_{HS}$ out (kg/hr) | S out A (g/L) | QH$_2$O A (kg/hr) | $\omega$c (by wt) | $\omega$A (by wt) | | |
| Example 1 | | 650 | 1807 | 37.3 | 1119.7 | 3113 | 3020 | 35.8 | -397.4 | 30.0 | -3.7 | 253 | 56 |
| Example 2 | | 750 | 1728 | 30 | 948 | 3250 | 3080 | 31.9 | -446.6 | 31.6 | -4.7 | 283 | 50 |
| Example 3 | | 950 | 1784 | 31.4 | 802.6 | 3100 | 3270 | 30.4 | -109.9 | 25.6 | -1.2 | 282 | 53.5 |
| Comparative Example 1 | | 550 | 1934 | 30.2 | 1353.8 | 3520 | 2770 | 38.3 | -1045.9 | 44.8 | -9.2 | 267 | 41.7 |

Referring to Table 1, it was shown that the current efficiency of the cation exchange membrane CH100' of Comparative Example 1 having a $\omega_C$ value of 44.8 was 41.7%, which was significantly lower than those of Examples 1 to 3. The cation exchange membrane had a so-called Donnan exclusion effect in which anion migration is repelled and blocked by a fixed anion (co-ion) inside the membrane, and it is known that the higher the fixed anion density, the higher the Donan exclusion effect. However, when the $\omega_C$ value was 44.8, it is considered that the cation exchange membrane was excessively swollen by water to lower the fixed anion density inside the cation exchange membrane, resulting in a significant decrease in the Donan exclusion effect on an anion (OH$^-$).

Therefore, it is considered that since the OH$^-$ anion in the produced lithium hydroxide aqueous solution overcame the Donan exclusion effect by an anion (co-ion) of the swollen cation exchange membrane, back-migrated significantly more toward the lithium sulfate salt aqueous solution, and consumed current applied as much as the amount of back-migrating OH$^-$ anion, current efficiency was decreased.

In Table 1, the migration amount ratio ($\omega_A$) between water and sulfate migrating through the anion exchange membrane is represented as a negative number (-). The amount of water ($H_2O$) flowing in the bipolar membrane and the amount of the hydrogen ion (H$^+$) produced by dissociation in the bipolar membrane in the acid chamber were represented as calculated values assuming that they may be offset each other, but actually, it is because the amount of inflowing water is larger than the amount of a discharged hydrogen ion.

The present disclosure is not limited by the above exemplary embodiments and may be manufactured in various forms different from each other, and it may be understood that a person with ordinary skill in the art to which the present disclosure pertains may carry out the present disclosure in another specific form without modifying the technical idea or essential feature of the present disclosure. Therefore, it should be understood that the exemplary embodiments described above are illustrative and are not restrictive in all aspects.

**Claims**

1. A method for simultaneously preparing lithium hydroxide and sulfuric acid, the method comprising:

   preparing a bipolar membrane electrodialysis device including a first bipolar membrane, an anion exchange membrane, a cation exchange membrane, and a second bipolar membrane in which an acid chamber is formed between the first bipolar membrane and the anion exchange membrane, a salt chamber is formed between the anion exchange membrane and the cation exchange membrane, and a base chamber is formed between the cation exchange membrane and the second bipolar membrane;
   adding a lithium sulfate aqueous solution to the salt chamber, adding a sulfuric acid aqueous solution to the acid chamber, and adding a lithium hydroxide aqueous solution to the base chamber of the bipolar membrane electrodialysis device; and
   discharging a desalination solution formed in the salt chamber, discharging the sulfuric acid aqueous solution formed in the acid chamber, and discharging the lithium hydroxide aqueous solution formed in the base chamber of the bipolar membrane electrodialysis device,
   wherein a migration amount weight ratio between water ($H_2O$) and a lithium cation ($Li^+$) in the cation exchange membrane of the bipolar membrane electrodialysis device is 40 or less.

2. The method for simultaneously preparing lithium hydroxide and sulfuric acid of claim 1, wherein:
   a ratio of a flow rate of the lithium hydroxide aqueous solution added to the base chamber to a flow rate of the lithium hydroxide aqueous solution discharged from the base chamber of the bipolar membrane electrodialysis device is 0.3 to 0.6.

3. The method for simultaneously preparing lithium hydroxide and sulfuric acid of claim 1, wherein:
   a ratio of a flow rate of the sulfuric acid aqueous solution added to the acid chamber to a flow rate of the sulfuric acid aqueous solution discharged from the acid chamber of the bipolar membrane electrodialysis device may be 0.9 to 1.2.

4. The method for simultaneously preparing lithium hydroxide and sulfuric acid of claim 1, wherein:
   a current density passing through the cation exchange membrane and the anion exchange membrane of the bipolar membrane electrodialysis device is 20 mA/cm$^2$ to 150 mA/cm$^2$.

5. The method for simultaneously preparing lithium hydroxide and sulfuric acid of claim 1, wherein:

   a concentration of the lithium hydroxide aqueous solution added to the base chamber of the bipolar membrane electrodialysis device is 0 mol/L to 1 mol/L, and
   a concentration of the lithium hydroxide aqueous solution discharged from the base chamber of the bipolar membrane electrodialysis device is 1 mol/L to 5 mol/L.

6. The method for simultaneously preparing lithium hydroxide and sulfuric acid of claim 1, wherein:

   a concentration of the sulfuric acid aqueous solution added to the acid chamber of the bipolar membrane electrodialysis device is 0 mol/L to 0.5 mol/L, and
   a concentration of the sulfuric acid aqueous solution discharged from the acid chamber of the bipolar membrane electrodialysis device is 0.5 mol/L to 3 mol/L.

7. The method for simultaneously preparing lithium hydroxide and sulfuric acid of claim 1, wherein:

   a concentration of the lithium sulfate aqueous solution added to the salt chamber of the bipolar membrane electrodialysis device is 0.5 mol/L to 2.5 mol/L, and
   a concentration of the lithium sulfate aqueous solution discharged from the salt chamber of the bipolar membrane electrodialysis device is 0.1 mol/L to 2 mol/L.

8. The method for simultaneously preparing lithium hydroxide and sulfuric acid of claim 1, wherein:

the bipolar membrane electrodialysis device is
two or more serially connected electrodialysis stacks including the first bipolar membrane, the anion exchange membrane, the cation exchange membrane, and the second bipolar membrane in which the acid chamber is formed between the first bipolar membrane and the anion exchange membrane, the salt chamber is formed between the anion exchange membrane and the cation exchange membrane, and the base chamber is formed between the cation exchange membrane and the second bipolar membrane.

# FIG. 1

# FIG. 2

## INTERNATIONAL SEARCH REPORT

| International application No. |
|---|
| **PCT/KR2024/012250** |

| A. | CLASSIFICATION OF SUBJECT MATTER |
|---|---|

**C01D 1/38**(2006.01)i; **C01D 15/02**(2006.01)i; **C01B 17/90**(2006.01)i; **B01D 61/44**(2006.01)i; **B01D 61/42**(2006.01)i

According to International Patent Classification (IPC) or to both national classification and IPC

| B. | FIELDS SEARCHED |
|---|---|

Minimum documentation searched (classification system followed by classification symbols)

C01D 1/38(2006.01); B01D 61/42(2006.01); B01D 61/44(2006.01); B01D 61/46(2006.01); B01J 19/08(2006.01); C01D 15/02(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 리튬 (lithium), 수산화 리튬 (lithium hydroxide), 바이폴라 전기투석장치 (bipolar electrodialysis device), 전류효율 (electric current efficiency), 전기투석 스택 (electrodialysis stack)

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | KR 10-2022-0086862 A (DAEJIN UNIVERSITY CENTER FOR EDUCATIONAL INDUSTRIAL COOPERATION) 24 June 2022 (2022-06-24)<br>See claim 1; paragraph [0057]; and figure 1. | 1-8 |
| Y | WO 2013-153692 A1 (ASAHI KASEI KABUSHIKI KAISHA) 17 October 2013 (2013-10-17)<br>See paragraphs [0043] and [0118]; and figure 2. | 1-8 |
| Y | KR 10-2016-0129657 A (RESEARCH INSTITUTE OF INDUSTRIAL SCIENCE & TECHNOLOGY) 09 November 2016 (2016-11-09)<br>See paragraph [0096]; and figure 4. | 8 |
| A | KR 10-2011-0036772 A (CHEMETALL FOOTE CORPORATION) 08 April 2011 (2011-04-08)<br>See claim 1; paragraphs [0019] and [0035]; and figures 1 and 4. | 1-8 |
| A | JP 2012-171827 A (JX NIPPON MINING & METALS CORP) 10 September 2012 (2012-09-10)<br>See claim 1; paragraph [0001]; and figure 1. | 1-8 |

☑ Further documents are listed in the continuation of Box C.    ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **30 December 2024** | **01 January 2025** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| International application No. |
| --- |
| **PCT/KR2024/012250** |

| C. | DOCUMENTS CONSIDERED TO BE RELEVANT | |
| --- | --- | --- |
| Category* | Citation of document, with indication, where appropriate, of the relevant passages | Relevant to claim No. |
| A | KR 10-2020-0090741 A (CHENGDU CHEMPHYS CHEMICAL INDUSTRY CO., LTD. et al.) 29 July 2020 (2020-07-29)<br>See claim 1; paragraph [0016]; and figure 6. | 1-8 |

Form PCT/ISA/210 (second sheet) (July 2022)

## INTERNATIONAL SEARCH REPORT
### Information on patent family members

International application No.

**PCT/KR2024/012250**

| Patent document cited in search report | | | Publication date (day/month/year) | Patent family member(s) | | | Publication date (day/month/year) |
|---|---|---|---|---|---|---|---|
| KR | 10-2022-0086862 | A | 24 June 2022 | KR | 10-2468033 | B1 | 16 November 2022 |
| WO | 2013-153692 | A1 | 17 October 2013 | WO | 2013-153692 | A1 | 17 October 2013 |
| KR | 10-2016-0129657 | A | 09 November 2016 | AU | 2016-254855 | A1 | 03 November 2016 |
| | | | | CA | 2984567 | A1 | 03 November 2016 |
| | | | | CA | 2984567 | C | 01 December 2020 |
| | | | | CL | 2017-002736 | A1 | 01 June 2018 |
| | | | | CN | 107787302 | A | 09 March 2018 |
| | | | | EP | 3290393 | A1 | 07 March 2018 |
| | | | | JP | 2018-522709 | A | 16 August 2018 |
| | | | | JP | 6602893 | B2 | 06 November 2019 |
| | | | | KR | 10-1700684 | B1 | 31 January 2017 |
| | | | | US | 2018-0148342 | A1 | 31 May 2018 |
| | | | | WO | 2016-175613 | A1 | 03 November 2016 |
| KR | 10-2011-0036772 | A | 08 April 2011 | AU | 2012-261548 | B2 | 21 February 2013 |
| | | | | CA | 2809241 | A1 | 20 May 2010 |
| | | | | CL | 2010-001304 | A1 | 17 June 2011 |
| | | | | CN | 102036739 | A | 27 April 2011 |
| | | | | EP | 2358663 | A1 | 24 August 2011 |
| | | | | EP | 2365867 | A1 | 21 September 2011 |
| | | | | JP | 2012-504545 | A | 23 February 2012 |
| | | | | JP | 5542141 | B2 | 09 July 2014 |
| | | | | KR | 10-2011-0086167 | A | 27 July 2011 |
| | | | | MX | 2011-005159 | A | 28 July 2011 |
| | | | | US | 2011-0263873 | A1 | 27 October 2011 |
| | | | | US | 2012-0330030 | A1 | 27 December 2012 |
| | | | | US | 8288566 | B2 | 16 October 2012 |
| | | | | WO | 2010-055162 | A1 | 20 May 2010 |
| | | | | WO | 2010-056322 | A1 | 20 May 2010 |
| JP | 2012-171827 | A | 10 September 2012 | | None | | |
| KR | 10-2020-0090741 | A | 29 July 2020 | AU | 2019-333834 | A1 | 06 August 2020 |
| | | | | CA | 3077834 | A1 | 18 July 2020 |
| | | | | CN | 109650414 | A | 19 April 2019 |
| | | | | CN | 109650414 | B | 14 January 2020 |
| | | | | EP | 3712113 | A1 | 23 September 2020 |
| | | | | EP | 4019468 | A1 | 29 June 2022 |
| | | | | JP | 2021-120350 | A | 19 August 2021 |
| | | | | JP | 2021-507864 | A | 25 February 2021 |
| | | | | JP | 6913329 | B2 | 04 August 2021 |
| | | | | JP | 7113467 | B2 | 05 August 2022 |
| | | | | US | 11097954 | B2 | 24 August 2021 |
| | | | | US | 2020-0385280 | A1 | 10 December 2020 |
| | | | | US | 2021-0323833 | A1 | 21 October 2021 |
| | | | | WO | 2020-147224 | A1 | 23 July 2020 |

Form PCT/ISA/210 (patent family annex) (July 2022)